# DEMANDE DE BREVET EUROPEEN

(11) **EP 2 560 303 A1**
(43) Date de publication de la demande: **20.02.2013**
(21) Numéro de dépôt: 11306055.2
(22) Date de dépôt: 18.08.2011
(51) Int. Cl.: H04B 13/00

(54) **Dispositif de communication à travers le corps personnalisable par accessoire**

(71) Demandeur: Gemalto SA, 92190 Meudon (FR)
(72) Inventeur: Fine, Jean-Yves, 13010 Marseille (FR)

(57) **Abrégé**

L'invention concerne un dispositif portable électronique (1) comprenant un module de communication (2) à travers le corps, ledit module comportant une surface de contact (3) destinée à contacter électriquement la peau d'un porteur,
- une base (4, 14) comportant ledit module,
- des moyens de solidarisation (5A, 5B) du dispositif à une partie du corps du porteur, au contact de la peau
- des moyens de fixation (6A, 6B) d'un accessoire personnel (7) ou un boîtier de montre (8) sur le dispositif.

## Description

### Domaine de l'invention.

La présente invention concerne des systèmes d'identification d'un individu au cours d'une transaction électronique.

Plus précisément, l'invention concerne des dispositifs personnels d'identification numérique pour effectuer des communications à travers le corps, comme le dispositif de type eGO décrit dans le brevet n° EP 1695296 B1 ou sur le site http://ego-project.eu/.

### Etat de l'art.

Le brevet EP 1695296 B1 de la demanderesse décrit le principe d'une communication à travers le corps dans laquelle il est prévu une authentification préalable de l'utilisateur par empreinte digitale.

L'invention a pour but de permettre à quiconque (portant une montre ou autre objet) de porter un dispositif d'identité numérique personnel de manière discrète et élégante.

En particulier, un besoin se fait sentir d'un dispositif unitaire (sans un nouvel objet ou accessoire) comportant des capacités de détection d'un détachement du dispositif par rapport au corps d'un utilisateur.

Subsidiairement, il y a également un besoin de capacités de détection de mouvement intégrées dans le dispositif pour effectuer une signature numérique de manière aisée et esthétique avec la sécurité requise.

### Caractéristiques résumées de l'invention.

Le principe de l'invention consiste à adapter un boîtier quelconque de montre ou un autre accessoire sur un dispositif à fixation corporelle notamment à bracelet, comportant un module de communication à travers le corps. Ainsi, le dispositif de communication à travers le corps est camouflé par l'esthétique de la montre ou de l'accessoire.

A cet effet l'invention a pour objet un dispositif portable électronique comprenant un module de communication à travers le corps (de type « eGo »), ledit module comportant une surface de contact destinée à contacter électriquement la peau d'un porteur,
- une base comportant ledit module,
- des moyens de solidarisation du dispositif à une partie du corps du porteur, au contact de la peau
- des moyens de fixation d'un accessoire personnel ou un boîtier de montre sur le dispositif.

Selon d'autres caractéristiques .
- Les moyens de solidarisation comprennent un bracelet comprenant des attaches de boîtier de montre disposées par-dessus le bracelet ;
- La base comprend un logement de réception du module de communication ; Le logement de réception est configuré de manière à recevoir le module de manière amovible ;
- Le dispositif comprend des moyens de détection d'une solidarisation et désolidarisation au porteur à base de plaques capacitives ;
- Le dispositif est configuré de manière à effectuer une transaction ou une validation après authentification du porteur et solidarisation à ce dernier dans un délai prédéterminé et/ou avant détection d'une désolidarisation ;
- Le dispositif comporte des moyens de détection de mouvement pour effectuer une signature par le porteur.

### Description des figures.

L'invention sera mieux comprise en se référant à la description suivante faite à titre d'exemple non limitatif et aux dessins ci-annexés, dans lesquels:
- La figure 1 représente un dispositif de communication à travers le corps conforme à l'invention;
- La figure 2 illustre un module de communication à travers le corps conforme à l'invention avec des exemples d'interfaces et/ou de connecteurs ;
- La figure 3 illustre un dispositif de communication à travers le corps conforme à l'invention supportant un accessoire tel un afficheur ;
- La figure 4 illustre un dispositif de communication à travers le corps conforme à l'invention supportant un boîtier de montre ;

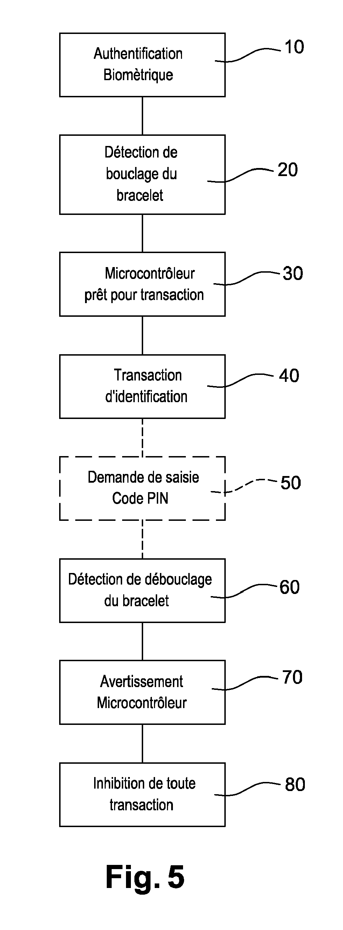

- La figure 5 illustre un organigramme des étapes de fonctionnement et/ou d'utilisation du dispositif de l'invention.

### Description détaillée de l'invention.

Des éléments similaires sont désignés par les mêmes numéros de référence dans l'ensemble des figures.

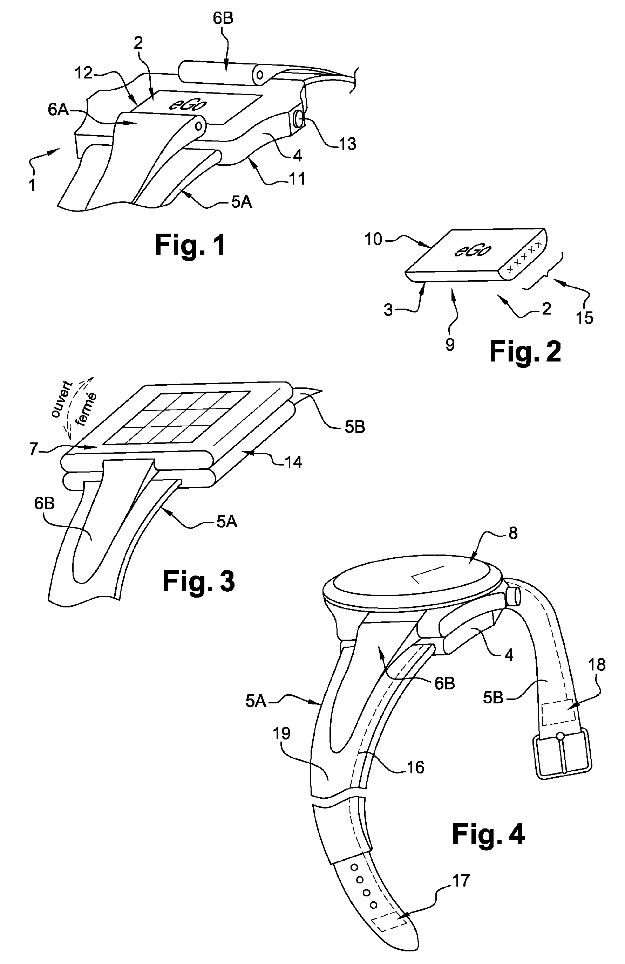

A la figure 1, un dispositif portable électronique conforme à mode de réalisation de l'invention, comprend un module de communication à travers le corps (de type eGo) 2 ; Le module comporte une surface de contact 3 destinée à contacter électriquement la peau d'un porteur ;
Alternativement, cette surface peut appartenir à une partie conductrice du dispositif connectée au module ;
Le dispositif comprend également une base 4 (ou boitier de base) comportant le module 2 ; Il comprend aussi des moyens de solidarisation 5A, 5B du dispositif à une partie du corps du porteur, au contact de la peau ;
Il comprend aussi des moyens de fixation 6A, 6B d'un accessoire personnel 7 ou d'un boîtier de montre 8 sur le dispositif.

Un module de communication à travers le corps de type eGo est décrit dans le brevet EP 1695296 B1 et ses caractéristiques essentielles sont incluses par référence.

Un module conforme à l'invention peut comprendre des moyens d'identification biométrique tels qu'un capteur d'empreintes digitales. Il peut également être connecté à un tel capteur situé hors du module. Tout autre moyen d'identification peut être utilisé comme par exemple des moyens de reconnaissance vocale.

Le module comprend des moyens de communication électrique à travers le corps, notamment de type capacitive, avec un appareil électrique d'utilisateur. Il comprend de préférence des moyens de mémorisation de données d'identification et/ou mot de passe, secrets pour un accès à l'appareil électrique.

Le dispositif ou le module comprend de préférence également des moyens de mémorisation pour mémoriser des données biométriques de l'utilisateur. Il comprend de préférence des moyens de traitement, (microcontrôleur pour mettre en oeuvre des étapes de sécurisation (comparaison, calcul cryptographique, validation et/ou autorisation de transaction électronique, de déclenchement d'opération, détection...).

Le module et/ou le dispositif peut comprendre ou non des moyens de communication radiofréquence RF ou NFC, tel une puce radiofréquence, une antenne ou un connecteur pour antenne.

Une transaction peut comprendre tout échange de données pour effectuer une opération (accès, paiement, personnalisation, sécurisation...) du type utilisé dans le domaine des cartes à puce.

Le module peut être fixé à demeure dans le dispositif notamment dans la base ou être amovible, extractible. Dans l'exemple, le module est conçu sous la forme d'un micro boîtier 2 amovible comprenant un enrobage ou enveloppe, notamment plastique ou métallique avec plusieurs éléments d'interface ou de connexion 15 lui permettant de fonctionner.

Parmi ces éléments, le module peut comprendre un capteur biométrique 9 (non visible) sur la face inférieure du module ou alternativement un connecteur pour relier un capteur biométrique disposé ailleurs ; Il peut comprendre un connecteur d'alimentation 10 à une pile ou batterie contenue par exemple dans la base.

La base peut comprendre des contacts ou un connecteur 11 de recharge électrique de la batterie (non visible). Le module peut comprendre une interface PC/écran tactile.

Selon d'autres caractéristiques et alternatives, les moyens de fixation 6A, 6B d'un accessoire ou de montre peuvent être positionnés sur la base 4 ou sur les moyens de solidarisation 5A, 5B, en l'occurrence le bracelet ;
- selon un mode préféré, les moyens de solidarisation comprennent ici un bracelet 5A, 5B avec des attaches 6A, 6B de boîtier de montre disposées par-dessus le bracelet 5A, 5B;

Le bracelet (5A, 5B) peut comprendre également des attaches de montre similaires à celles comprises dans les attaches 6A, 6B pour accrocher la base ;

La base 4 comprend un logement de réception 12 du module de communication 2 ;
- Le logement de réception 12 est configuré de manière à recevoir le module de manière amovible ; Des moyens de fixation amovible de tout type connu de l'homme de l'art, peuvent être prévus dans ce logement pour coopérer avec des moyens complémentaires disposés sur le module tels que encoches, glissières, épaulement...).

A la figure 3, le dispositif comprend comme accessoire un afficheur sensitif 7, de forme carrée en vue de dessus. L'afficheur repose sur une base 14 du type de celle de la figure 1

L'afficheur et/ou l'accessoire ou la base peuvent comprendre un contrôleur et/ou des fonctions diverses de télécommunication et/ou NFC. L'afficheur peut comprendre un clavier alphanumérique, de préférence sensitif, pour une interaction avec l'utilisateur notamment pour saisir un code PIN et être le cas échéant en connexion avec le module de sécurité 2 et/ou la base 14. Alternativement, une photographie de l'utilisateur peut être affichée à l'écran de l'afficheur pour un contrôle d'accès visuel.

Un ou plusieurs boutons de commande 13 peuvent être placés sur la base.

A la figure 4, le dispositif comprend une montre 8 de l'utilisateur comme accessoire. La montre se fixe discrètement sur la base par l'intermédiaire des attaches de montre 6A, 6B. Vu de dessus, la montre est visible pour des aspects esthétique tandis que la base 4 est masquée.

Le dispositif peut comprendre de préférence des moyens de détection d'une solidarisation et désolidarisation au porteur (non représentés entièrement). Ces moyens peuvent comprendre, par exemple, un circuit conducteur 16 s'étendant de la base 4, 14 vers les bras ou sous-parties 5A, 5B du bracelet et comportant aux extrémités des plaques de condensateur 17, 18.

En position de bracelet bouclé, les plaques de condensateur se trouvent en regard l'une de l'autre fermant ainsi le circuit électrique 16. Le dispositif comprend également un circuit de détection de l'état bouclé du bracelet qui est une fonction de l'écartement des plaques capacitives. Ce circuit peut être dans la base et peut alimenter en information une entrée du microcontrôleur.

Le dispositif est configuré de manière à effectuer une transaction après authentification et solidarisation de préférence dans un délai prédéterminé et/ou avant détection d'une désolidarisation.

Le dispositif peut comporter des moyens de détection de mouvement pour effectuer une signature par le porteur. Ainsi, lorsque le porteur est authentifié, ce dernier peut valider une transaction en effectuant un geste ou succession de gestes et/ou des accélérations dans l'espace avec son bras ou poignet, tel une signature virtuelle, qui est détectée par un accéléromètre et/ou détecteur de mouvement intégrés.

Cette signature est comparée à des données stockées dans une mémoire du dispositif pour validation. Un signal de validation peut éventuellement chiffré ou de type OTP (à usage unique) être ensuite émis par le dispositif vers un appareil de communication par une communication à travers la peau.

Les données de mouvement peuvent être transmises sous forme chiffrée à l'appareil de communication alors que l'utilisateur touche l'appareil d'une main et signe de l'autre main. L'appareil peut déchiffrer les données de mouvement et comparer la signature déchiffrée à celle mémorisée dans l'appareil pour validation, notamment d'un accès à l'appareil ou d'une transaction en cours.

L'invention a l'avantage de pouvoir faire signer l'utilisateur à l'aide du dispositif alors que l'utilisateur est authentifié biométriquement et en toute discrétion.

Bien que décrite en relation avec des moyens de fixation de type amovible d'un accessoire à fixer sur le dispositif, l'invention peut prévoir d'être utilisée dans une version sans accessoire et sans moyen de fixation de l'accessoire ou le boîtier de montre, pour l'une au moins des autres caractéristiques ou fonctions présentées dans la description.

Une utilisation et un fonctionnement sont décrits ci-après.

Un utilisateur désireux d'utiliser un ordinateur sécurisé, s'authentifie avec son dispositif (étape 10); Il place son doigt sur le capteur d'empreinte digitale 9 pour une reconnaissance du porteur ; il dispose ensuite d'un temps prédéterminé pour fixer la base autour de poignet et boucler le bracelet. Lors du bouclage, les capacités 17, 18 se rapprochent et cet état de rapprochement est détecté par le circuit de détection. Le circuit de détection informe le microcontrôleur (étape 20). Ce dernier sachant que le porteur a été préalablement authentifié dans le délai prévu, est prêt pour fonctionner pour des transactions souhaitées (étape 30).

L'authentification peut comprendre et mettre en oeuvre des moyens de reconnaissance vocale complémentaires ou alternatifs.

L'utilisateur touche un ordinateur équipé d'un système d'authentification par communication à travers le corps et une transaction d'identification intervient à travers la peau de l'utilisateur (étape 40).

Le cas échéant, (de manière facultative et en pointillé sur la figure), le système de sécurité de l'ordinateur ou d'une session de transaction internet prévoit une saisie de code PIN par l'utilisateur qui à l'aide notamment de l'accessoire 7 introduit son code sur l'afficheur sensitif (étape 50). Ce code peut réactiver l'authentification du porteur par le module et/ou permettre de transmettre une validation de transaction en ligne notamment sur un site marchand (étape 60). Cela permet de valider une transaction en toute discrétion et sans avoir à mettre en place un accessoire supplémentaire lors de la transaction ou de chaque transaction (retrait bancaire auprès de distributeurs, contrôle d'accès...).

Ensuite, l'utilisateur enlève son bracelet, ce qui provoque un éloignement des capacités 17, 18 l'une de l'autre ; cet état d'éloignement est détecté par le circuit de détection qui en informe le microcontrôleur (étape 70).

Ensuite, le microcontrôleur désactive ou inhibe toute autorisation de transaction par communication à travers le corps ou corporelle (étape 80).

## Revendications

1. Dispositif portable électronique (1) comprenant un module de communication (2) à travers le corps, ledit module comportant une surface de contact (3) destinée à contacter électriquement la peau d'un porteur,
- une base (4, 14)) comportant ledit module,
- des moyens de solidarisation (5A, 5B) du dispositif à une partie du corps du porteur, au contact de la peau
- des moyens de fixation (6A, 6B) d'un accessoire personnel (7) ou un boîtier de montre (8) sur le dispositif.

2. Dispositif portable électronique selon la revendication précédente, **caractérisé en ce que** lesdits moyens de fixation (6A, 6B) d'un accessoire sont positionnés sur la base (4, 14) ou sur lesdits moyens de solidarisation (5A, 5B).

3. Dispositif portable électronique selon l'une quelconque des revendications précédentes, **caractérisé en ce que** lesdits moyens de solidarisation (5A, 5B) comprennent ou constituent un bracelet comprenant des attaches de boîtier de montre disposées par-dessus le bracelet.

4. Dispositif portable électronique selon la revendication précédente, **caractérisé en ce que** le bracelet (5A ,5B) comprend des attaches de montre pour accrocher la base.

5. Dispositif portable électronique selon l'une quelconque des revendications précédentes, **caractérisé en ce que** la base (4, 14) comprend un logement de réception (12) du module de communication (2).

6. Dispositif portable électronique selon l'une quelconque des revendications précédentes, **caractérisé en ce que** le logement de réception est configuré de manière à recevoir le module (2) de manière amovible.

7. Dispositif portable électronique selon l'une quelconque des revendications précédentes, **caractérisé en ce qu'**il comprend des moyens de détection (16, 17, 18) d'une solidarisation et désolidarisation au porteur.

8. Dispositif portable électronique selon la revendication précédente, **caractérisé en ce qu'**il comprend un circuit de détection comportant des plaques capacitives (17, 18).

9. Dispositif portable électronique selon la revendication précédente, **caractérisé en ce qu'**il est configuré de manière à effectuer une transaction après authentification et solidarisation dans un délai prédéterminé et/ou avant détection d'une désolidarisation.

10. Dispositif portable électronique selon la revendication précédente, **caractérisé en ce qu'**il comporte des moyens de détection de mouvement pour effectuer une signature par le porteur.
